# FASCICULE DE BREVET EUROPEEN

(11) **EP 2 712 804 B1**
(45) Date de publication et mention de la délivrance du brevet: **01.02.2017**
(21) Numéro de dépôt: 13004194.0
(22) Date de dépôt: 26.08.2013
(51) Int. Cl.: B64C 25/52

(54) **TRAIN D'ATTERRISSAGE MUNI D'UN RAIDISSEUR POUR AUGMENTER SA RAIDEUR EN ROULIS, ET AÉRONEF**
FAHRWERK MIT EINEM VERSTEIFUNGSELEMENT ZUR ERHÖHUNG DER ROLLSTEIFIGKEIT, UND LUFTFAHRZEUG
LANDING GEAR PROVIDED WITH A STIFFENING ELEMENT TO INCREASE ITS ROLL STIFFNESS, AND AIRCRAFT

(30) Priorité: 27.09.2012 FR 1202567
(43) Date de publication de la demande: 02.04.2014
(73) Titulaire: Airbus Helicopters, 13725 Marignane Cedex (FR)
(72) Inventeur: Prud'Homme-Lacroix, Pierre, F-13127 Vitrolles (FR)
(74) Mandataire: GPI & Associés

(56) Documents cités:
- FR-A1- 2 554 210
- US-A- 3 173 632
- US-A- 4 519 559

## Description

La présente invention concerne un train d'atterrissage muni d'un raidisseur pour augmenter sa raideur en roulis, et un aéronef muni de ce train d'atterrissage. Plus précisément, l'invention se situe dans le domaine technique des trains d'atterrissage à patins.

Classiquement, un giravion comporte un train d'atterrissage sur lequel le giravion repose au sol. Plus particulièrement, parmi les trains d'atterrissage, on distingue les trains d'atterrissage dénommés « train d'atterrissage à patins » munis d'un premier patin longitudinal d'appui et d'un deuxième patin longitudinal d'appui. Les patins sont destinés à être en contact avec le sol et disposés de part et d'autre du fuselage du giravion. Le premier patin longitudinal d'appui et le deuxième patin longitudinal définissent conjointement un plan dénommé « plan d'appui » par commodité.

L'aéronef repose alors sur le sol via deux patins allongés.

De plus, le train d'atterrissage à patins est usuellement muni d'une première traverse transversale et d'une deuxième traverse transversale reliant chacune le premier patin au deuxième patin pour relier chaque patin au fuselage de l'aéronef.

La première traverse est dite « traverse avant » puisque cette première traverse relie au fuselage les zones situées à l'avant du premier patin longitudinal et du deuxième patin longitudinal. A l'inverse, la deuxième traverse est dite «traverse arrière » dans la mesure où cette deuxième traverse relie au fuselage les zones situées à l'arrière du premier patin longitudinal et du deuxième patin longitudinal.

Le train d'atterrissage est alors fixé à l'aéronef par ses traverses avant et arrière.

Ces trains d'atterrissages sont très efficaces et permettent aux giravions de se poser sur de multiples types de surfaces.

Par ailleurs, un giravion comportant au moins trois pales articulées peut être notamment soumis à un phénomène de résonance sol.

En effet, les oscillations de chaque pale autour de son axe de traînée peuvent se coupler de façon instable avec les mouvements du fuselage du giravion suivant les modes de déformations élastiques du train d'atterrissage : c'est l'origine du phénomène dénommé « résonance au sol »

Lors de leur rotation, les pales sont écartées de leur position d'équilibre et peuvent se répartir inégalement. Cette répartition inégale est à l'origine d'un balourd par déplacement du centre de gravité du rotor hors de l'axe de rotation de ce rotor. De plus, les pales écartées de leur position d'équilibre oscillent autour de cette position d'équilibre à une fréquence d'oscillation *ω_{δ}* qui est la fréquence propre des pales en traînée.

Si Ω est la fréquence de rotation du rotor, le fuselage du giravion est ainsi excité aux fréquences |Ω±*ω_{δ}*|.

Posé au sol sur un train d'atterrissage, le fuselage du giravion constitue schématiquement un système à masse soutenue au dessus du sol par un ressort et un amortisseur au niveau de branches descendante des traverses. Le fuselage reposant sur le train d'atterrissage est donc caractérisé par des modes propres de vibration en roulis et en tangage. Il y a risque d'instabilité au sol lorsque la fréquence propre du fuselage en roulis ou en tangage est voisine de la fréquence propre d'oscillation |Ω+*ω_{δ}*| ou |Ω-*ω_{δ}*| ce qui correspond au phénomène dénommé résonance sol.

Pour éviter l'instabilité, il est notamment connu de rechercher à éviter le croisement de ces fréquences en adaptant la raideur en roulis et/ ou en tangage du train d'atterrissage.

Toutefois, l'adaptation des trains d'atterrissage peut être complexe. Un compromis doit notamment être trouvé entre d'une part la raideur verticale du train d'atterrissage qui gère le confort et le niveau de charge introduit dans la structure lors d'un atterrissage, et d'autre part les raideurs en tangage et en roulis qui sont très influentes sur le comportement en résonance sol.

On rappelle que l'homme du métier appelle « raideur verticale » la raideur du train d'atterrissage sous l'effet de la pesanteur selon l'axe en élévation de l'aéronef, à l'assiette statique près.

La mise au point d'un train d'atterrissage à patins est ainsi généralement longue et délicate. Cette mise au point est donc rarement remise en cause au cours de la vie de l'aéronef.

Cependant, des modifications substantielles d'un aéronef peuvent survenir au cours de sa vie. Les fréquences propres du fuselage en roulis et/ ou en tangage peuvent alors évoluer, et risquer de générer l'apparition du phénomène de résonance sol.

Dans ce cas, un constructeur peut tenter de modifier les raideurs du train d'atterrissage en roulis et en tangage, sans trop influencer le comportement de l'aéronef à l'atterrissage notamment.

A cet effet, des modifications géométriques peuvent être apportées à un train d'atterrissage à patins. Toutefois, ces modifications géométriques peuvent présenter l'inconvénient de modifier la rigidité verticale du train d'atterrissage. Le comportement du train à l'atterrissage peut alors notamment être impacté.

Des essais de certification peuvent alors s'avérer nécessaires pour justifier que le train d'atterrissage modifié répond toujours aux règlements de certification en vigueur.

En outre, on rappelle que la mise au point d'un train d'atterrissage à patins peut être longue et onéreuse.

La présente invention a alors pour objet de proposer un train d'atterrissage muni d'un raidisseur, ainsi qu'un aéronef comportant un tel train d'atterrissage.

Dans ce contexte, l'arrière plan technologique inclut le document FR 2 554 210 qui présente une poutre flexible en matériaux composites ayant sensiblement la forme d'un caisson allongé de structure stratifiée. Deux semelles rigides sont reliées par deux voiles.

Un plot déformable d'absorption d'énergie est disposé entre les deux semelles, et comporte au moins un bloc d'un matériau élastomère à forte rémanence de déformation.

La poutre comprend de plus au moins un amortisseur viscoélastique monté sur la face externe de la semelle. Cet amortisseur est sollicité en traction par la déformation en flexion de la poutre pour produire un amortissement s'ajoutant à l'amortissement assuré par chaque plot d'absorption d'énergie.

Une telle poutre peut être mise en oeuvre sur un train d'atterrissage à patins.

Ce montage suggère l'utilisation d'un élastomère au sein d'une traverse et au sein d'un amortisseur fixé sous la traverse. Ce montage est éloigné de l'invention en ayant une influence restreinte sur le positionnement des fréquences propres du fuselage en roulis ou en tangage par rapport aux fréquences propres d'oscillation |Ω-*ω_{δ}*| ou |Ω-*ω_{δ}*|.

Le document US 4 270 711 présente un train d'atterrissage muni d'une poutre reliée par un pivot à une traverse du train d'atterrissage de manière à pouvoir effectuer une rotation autour d'un axe. Les extrémités de la poutre sont alors fixées à la structure d'un aéronef.

Cet enseignement permet notamment de fixer un train d'atterrissage muni de trois points de fixation à une structure comportant quatre points de fixation.

Le document US 6 244 538 présente un train d'atterrissage.

Ce document permet de positionner les fréquences propres du fuselage en roulis ou en tangage par rapport aux fréquences propres d'oscillation |Ω-*ω_{δ}*| ou |Ω-*ω_{δ}*| en fonction du point de foisonnement de bielles supports.

Le document US 3,173,632 présente un train d'atterrissage muni de deux patins reliés par deux tiges de torsion. Chaque tige de torsion est solidaire de deux bras, chaque bras étant articulé à un montant s'élevant en élévation à partir d'un patin.

De plus, un moyen d'immobilisation peut autoriser ou empêcher une rotation de chaque tige de torsion autour de son axe de symétrie.

On connait aussi le document US 4, 519, 559.

L'invention vise alors un train d'atterrissage muni d'un raidisseur pour augmenter sa raideur en roulis, en générant une modification limitée voire nulle de la raideur verticale de ce train d'atterrissage.

Selon l'invention, un train d'atterrissage d'aéronef est muni d'un premier patin longitudinal d'appui et d'un deuxième patin longitudinal d'appui ainsi que d'une traverse avant transversale et d'une traverse arrière transversale reliant chacune le premier patin au deuxième patin. Chaque traverse comprend alors une première branche descendante solidarisée au premier patin, ainsi qu'une deuxième branche descendante solidarisée au deuxième patin et une portion centrale solidarisée à la première branche descendante et à la deuxième branche descendante.

Ce train d'atterrissage comporte au moins un raidisseur agencé sur une traverse, ce raidisseur ayant au moins une bielle et au moins un moyen de limitation de la déformation en roulis de la portion centrale suite à un mouvement en roulis de l'aéronef au sol.

Le moyen de limitation d'un raidisseur est alors solidarisé à la portion centrale de la traverse équipée. De plus, ce raidisseur comporte au moins une articulation principale pour articuler chaque bielle au moyen de limitation et une articulation secondaire par bielle pour articuler chaque bielle à un point extérieur à la portion centrale afin de limiter la déformation de la portion centrale suite à un mouvement de roulis d'un aéronef.

On entend par « articulation » tout moyen ou dispositif permettant à la bielle d'effectuer un mouvement par rapport à l'organe auquel elle est articulée.

Ainsi, une articulation peut éventuellement comprendre un simple orifice et un pivot. Une articulation principale peut alors par exemple comprendre un orifice ménagé dans une bielle, l'orifice étant traversé par un axe qui est relié au moyen de limitation.

De manière surprenante, un tel raidisseur permet d'augmenter la raideur en roulis d'un train d'atterrissage en ayant un impact limité voire nul sur la raideur verticale de ce train d'atterrissage.

De plus, on comprend que l'invention peut être obtenue en adaptant un tel raidisseur sur un train d'atterrissage existant, par exemple pour adapter le train d'atterrissage à une nouvelle configuration d'un giravion. Suite à une augmentation de la masse d'un giravion ou à une modification d'un rotor de sustentation d'un giravion, un raidisseur selon l'invention peut éventuellement être implémenté.

En effet, la portion centrale de la traverse se déforme différemment en fonction de la manière dont elle est sollicitée.

Cette traverse est sollicitée selon un premier mode de flexion verticale lors d'un atterrissage, et selon un deuxième mode de flexion en roulis sous une sollicitation en roulis obtenue au sol par exemple.

Ainsi, cette portion centrale présente une forme de C durant un premier mode de flexion verticale. La déformée de la portion centrale présente donc un ventre.

Chaque bielle d'un raidisseur autorise alors un déplacement du moyen de limitation correspondant conjointement avec la portion centrale. L'impact du raidisseur sur la raideur verticale du train d'atterrissage est donc limité.

Par contre, la portion centrale d'une traverse tend à présenter une forme de S durant le deuxième mode de flexion en roulis. La déformée de la portion centrale présente donc deux ventres se rejoignant en un noeud.

Chaque bielle d'un raidisseur tend alors à empêcher un déplacement du moyen de limitation associé.

Le moyen de limitation tend ainsi à limiter la déformation de la portion centrale. La raideur en roulis du train d'atterrissage est donc augmentée.

L'invention présente par conséquent un raidisseur prenant en considération la déformée d'une traverse, et plus particulièrement la déformée de sa portion centrale liée à la structure d'un aéronef, pour agir principalement sur la raideur en roulis du train d'atterrissage.

Ce train d'atterrissage peut de plus comporter une ou plusieurs des caractéristiques additionnelles qui suivent.

Par exemple, seule la traverse avant peut être munie d'un raidisseur.

Il est cependant parfaitement envisageable d'équiper les deux traverses d'un train d'atterrissage.

Par ailleurs, chaque moyen de limitation peut être un gousset comportant d'une part une embase solidarisée à une portion centrale, et d'autre part une extrémité distale qui est articulée à au moins une bielle par une articulation principale.

Selon un premier mode de réalisation, le raidisseur d'une traverse comporte un unique gousset, ce gousset ayant une embase s'étendant le long d'une portion centrale de part et d'autre d'un plan de symétrie de cette portion centrale.

Le déplacement du gousset est alors maximal selon le premier mode de flexion verticale obtenu lors d'un atterrissage.

Par contre, le gousset tend à n'effectuer qu'une rotation lors du deuxième mode de flexion en roulis. Un dispositif relativement simple peut alors tendre à immobiliser le gousset en annihilant une telle rotation.

Selon une première variante de ce premier mode de réalisation, le raidisseur comporte alors une unique bielle s'étendant d'une première extrémité articulée à un gousset par une articulation principale, vers une deuxième extrémité coopérant avec une articulation secondaire.

La deuxième articulation peut alors être articulée au fuselage d'un aéronef reposant sur le train d'atterrissage.

Selon une autre alternative, le raidisseur comporte une bride de fixation de la portion centrale à une structure d'un aéronef, ladite articulation secondaire articulant ladite bielle à ladite bride de fixation.

Lors du deuxième mode de flexion en roulis, le point extérieur auquel est articulée la bielle tend à rester immobile par rapport au train d'atterrissage. Une rotation du gousset durant le deuxième mode de flexion en roulis tend alors à être bloquée par la bielle du raidisseur. Le gousset limite donc la déformation de la portion centrale.

Selon une deuxième variante de ce premier mode de réalisation, un raidisseur comporte une première bielle qui est articulée d'une part audit gousset et d'autre part à la première branche descendante d'une traverse, ce raidisseur ayant une deuxième bielle qui est articulée d'une part audit gousset et d'autre part à la deuxième branche descendante de la traverse.

Un constructeur peut en effet identifier un point dit principal du gousset qui est articulé aux deux bielles par une articulation principale, et deux points dits secondaires respectivement des première et deuxième branches descendantes qui sont articulées aux deux bielles par deux articulations secondaires et qui répondent aux deux critères suivants :
- le point principal reste à égale distance des deux points secondaires dans le premier mode de flexion verticale,
- les deux points secondaires tendent à subir un fort déplacement relatif dans le deuxième mode de flexion en roulis.

Selon un deuxième mode de réalisation, le raidisseur d'une portion centrale comporte :
- deux goussets disposés de part et d'autre d'un plan de symétrie de cette portion centrale,
- deux bielles s'étendant chacune d'une première extrémité vers une deuxième extrémité coopérant avec une articulation secondaire, chaque bielle étant articulée à un gousset par une articulation principale entre sa première extrémité et sa deuxième extrémité, lesdites premières extrémités desdites deux bielles étant articulées l'une à l'autre par une articulation tertiaire, chaque articulation secondaire étant articulée à un point extérieur à ladite portion centrale.

Chaque articulation secondaire peut alors être articulée au fuselage d'un aéronef reposant sur le train d'atterrissage.

Selon une autre variante du deuxième mode de réalisation, le raidisseur comporte deux brides de fixation de la portion centrale à une structure d'un aéronef, chaque articulation secondaire étant articulée à une bride de fixation.

Indépendamment de la variante, les deux goussets sont éventuellement symétriques par rapport audit plan de symétrie, les deux bielles étant symétriques par rapport à ce plan de symétrie.

Outre un train d'atterrissage, l'invention vise un aéronef. Cet aéronef comporte un train d'atterrissage selon l'invention tel que décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, un aéronef selon l'invention,
- la figure 2, un schéma présentant une première variante d'un premier mode de réalisation,
- la figure 3, un schéma présentant une deuxième variante d'un premier mode de réalisation,
- la figure 4, un schéma présentant un deuxième mode de réalisation,
- la figure 5, un schéma présentant la déformée d'une traverse dans le premier mode de flexion verticale,
- la figure 6, un schéma présentant la déformée d'une traverse dans le deuxième mode de flexion en roulis,
- les figures 7 et 8, des schémas explicitant le fonctionnement d'une première variante d'un premier mode de réalisation,
- les figures 9 et 10, des schémas explicitant le fonctionnement d'une deuxième variante d'un premier mode de réalisation, et
- les figures 11 et 12, des schémas explicitant le fonctionnement d'un deuxième mode de réalisation.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » ou « vertical » est relative à toute direction parallèle à la troisième direction Z.

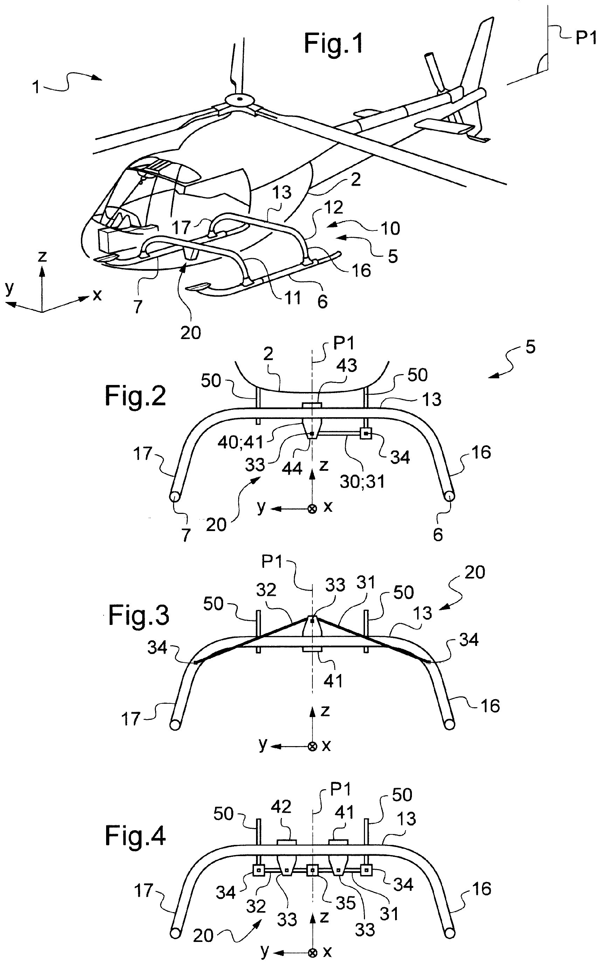

La figure 1 présente un aéronef 1, et plus particulièrement un giravion.

Cet aéronef 1 est muni d'un fuselage 2 qui s'étend longitudinalement le long d'un plan de symétrie P1 antéropostérieur. De plus, le fuselage est solidaire d'un train d'atterrissage 5 à patins.

On note qu'une partie du fuselage 2 a été rendue transparente pour permettre la visualisation du train d'atterrissage 5.

Ce train d'atterrissage 5 comporte un premier patin 6 longitudinal d'appui et d'un deuxième patin 7 longitudinal d'appui.

Dès lors, le train d'atterrissage comprend deux traverses 10 reliant le premier patin 6 et le deuxième patin 7, à savoir une traverse avant 11 transversale et une traverse arrière 12 transversale.

Chaque traverse 10 est pourvue d'une première branche 16 qui est solidarisée au premier patin 6, d'une deuxième branche 17 solidarisée au deuxième patin 7, et d'une portion centrale 13 solidarisée à la première branche 16 et à la deuxième branche descendante 17. Les branches sont parfois dénommées « branches descendantes » dans la mesure où elles s'étendent de la portion centrale vers un patin en se rapprochant du sol. Ainsi, chaque portion centrale 13 est sensiblement contenu dans un plan horizontal, les branches descendantes 16, 17 s'étendant de ce plan horizontal vers les patins 6, 7. Chaque portion centrale peut comprendre un tube rectiligne ou possédant une faible courbure.

Le train d'atterrissage 5 est alors relié au fuselage 2 par des moyens de fixation, tels que des brides de fixation.

Selon l'invention, ce train d'atterrissage 5 est muni d'au moins un raidisseur 20 coopérant avec une traverse 10. Ce raidisseur 20 est simplement représenté de manière schématique sur la traverse avant de la figure 1 pour ne pas alourdir la représentation.

Eventuellement, chaque traverse peut être munie d'un tel raidisseur.

Les figures 2 à 4 présentent un raidisseur selon deux modes de réalisation.

Indépendamment de la réalisation et en référence à la figure 1, chaque raidisseur 20 selon l'invention comporte au moins une bielle 30 coopérant avec un moyen de limitation 40 solidarisé à la portion centrale d'une traverse. Chaque bielle peut s'étendre transversalement.

Chaque bielle 30 a alors pour fonction d'entraver le mouvement du moyen de limitation durant le deuxième mode de flexion en roulis, tout en ayant un impact limité sur le premier mode de flexion verticale.

Dès lors, le moyen de limitation tend à limiter la déformation de la portion centrale durant le deuxième mode de flexion en roulis. Le raidisseur permet donc d'augmenter la raideur en roulis du train d'atterrissage, en ayant un impact limité sur la raideur verticale de ce train d'atterrissage.

On verra par la suite que ce double objectif peut être rempli à l'aide d'un dispositif relativement simple. En effet, la déformée de la portion centrale prend des formes différentes selon le mode de flexion sollicité.

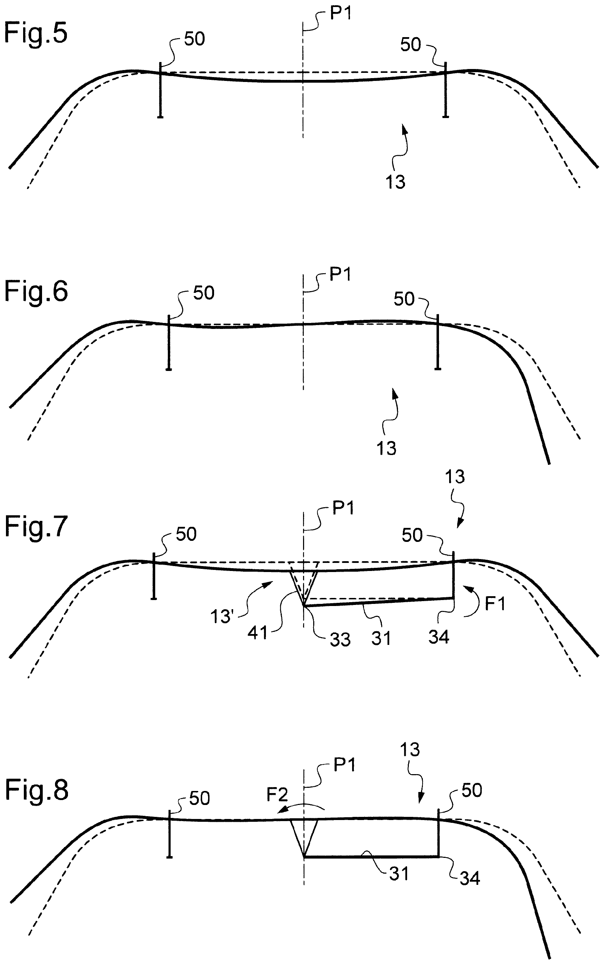

La figure 5 présente une représentation d'une traverse en vol en traits en pointillées et une représentation d'une traverse lors d'un atterrissage en trait plein.

Lors d'un atterrissage, la traverse est sollicitée selon un premier mode de flexion verticale. La portion centrale tend alors à avoir une forme de C.

Par contre, la figure 6 présente une représentation d'une traverse en vol en traits en pointillés, et en trait plein une représentation d'une traverse sollicitée au sol et rotor tournant selon un deuxième mode de flexion en roulis.

Selon ce mode de déformation, la portion centrale tend alors à avoir une forme de S en présentant deux lobes de part et d'autre du plan de symétrie P1.

L'invention prend donc en considération ces profils différents de déformées pour agir sur la raideur en roulis du train d'atterrissage, et pour avoir un impact limité sur la raideur verticale.

Dès lors et en référence à la figure 2, le moyen de limitation peut comprendre un gousset s'étendant en élévation d'une embase 43 vers une extrémité distale 44. L'embase 43 est fixée à la portion centrale alors que l'extrémité distale se trouve dans un plan placé au dessus ou en dessous de cette portion centrale.

De plus, chaque bielle est articulée au moyen de limitation par une articulation principale 33, telle qu'une articulation principale 33 coopérant avec l'extrémité distale 44 d'un gousset.

Chaque bielle est de plus articulée à un point extérieur à la portion centrale d'une traverse par une articulation secondaire 34. Le point extérieur est un point d'ancrage n'appartenant pas à la portion centrale d'une traverse, à savoir un point d'un organe distinct de la portion centrale

Selon un premier mode de réalisation représenté sur les figures 2 et 3, un raidisseur comporte un unique gousset 41.

Ce gousset 41 est disposé au milieu de la portion centrale. Par suite, l'embase 43 du gousset 41 s'étend de part et d'autre du plan de symétrie P1. Par contre, l'articulation principale 33 de chaque bielle est de fait sensiblement présente dans le plan de symétrie P1.

Selon une première variante du premier mode de réalisation schématisé sur la figure 2, le raidisseur possède une unique bielle 31. Cette unique bielle 31 s'étend alors d'une première extrémité coopérant avec une articulation principale 33, vers une deuxième extrémité coopérant avec une articulation secondaire 34.

L'articulation secondaire 34 est ainsi articulée à un point extérieur tel qu'un organe du fuselage 2, ou encore une bride 50 de fixation de la traverse au fuselage 2 selon l'exemple représenté.

Les figures 7 et 8 explicitent le fonctionnement de la première variante du premier mode de réalisation en représentant une traverse en vol en traits en pointillés, et en représentant la déformée d'une traverse en traits pleins.

En référence à la figure 7 et lors d'un atterrissage, la portion centrale tend à se déformer selon une forme de C.

Le tronçon central 13' de la portion centrale 13 portant le gousset 41 se rapproche du sol. Ce gousset 41 tend alors à se déplacer conjointement avec le tronçon central.

La bielle 31 a un impact limité sur ce mouvement. En effet, cette bielle 31 effectue alors une rotation autour de son articulation secondaire 34 selon la flèche F1. On comprend que le gousset peut à son tour effectuer une légère rotation sous l'impulsion de l'articulation principale 33.

On note que la bride 50 peut comporter un moyen de blocage transversal pour assurer la reprise d'efforts latéraux. Un cavalier fixé à la portion centrale 13 peut notamment être utilisé.

L'invention peut permettre d'éviter l'implémentation d'un tel moyen de blocage transversal. Selon cette variante, le gousset assure la reprise des efforts latéraux, ce qui permet de supprimer des butées latérales entre la traverse et le fuselage. Dès lors, le gousset peut rester sensiblement vertical, au lieu d'effectuer une légère rotation.

Dès lors, le raidisseur ne modifie pas, ou modifie peu la raideur verticale du train d'atterrissage et son comportement lors de l'atterrissage ou du décollage.

Par contre, le raidisseur a un impact non négligeable sur la raideur en roulis du train d'atterrissage.

En référence à la figure 8 et selon le deuxième mode de flexion en roulis au sol, la portion centrale tend à se déformer selon une forme en S en présentant deux ventres et un noeud.

Une telle déformation tend à induire une rotation du gousset 41 selon la flèche F2 au niveau du noeud. Cependant, le point extérieur auquel est articulée l'articulation secondaire 34 demeure fixe. La bielle 31 tend alors à empêcher le mouvement rotatif du gousset 41, et par suite la déformation de la portion centrale 13.

La raideur en roulis du train d'atterrissage est ainsi augmentée.

Selon une deuxième variante du premier mode de réalisation schématisée sur la figure 3, le raidisseur possède deux bielles 31, 32.

Ce raidisseur 20 inclut alors une première bielle 31 qui est articulée au gousset 41 par une articulation principale, et à la première branche 16 par une articulation secondaire. De même, le raidisseur 20 possède une deuxième bielle 32 qui est articulée par une articulation principale au gousset 41, et à la deuxième branche 17 par une articulation secondaire.

Chaque bielle peut ainsi être solidarisée à des pivots coopérant avec des orifices des goussets et des branches descendantes.

Le constructeur choisit des points d'articulation des bielles qui restent à distance constante lors de l'atterrissage, mais qui subissent un fort déplacement relatif lors du deuxième mode de flexion en roulis.

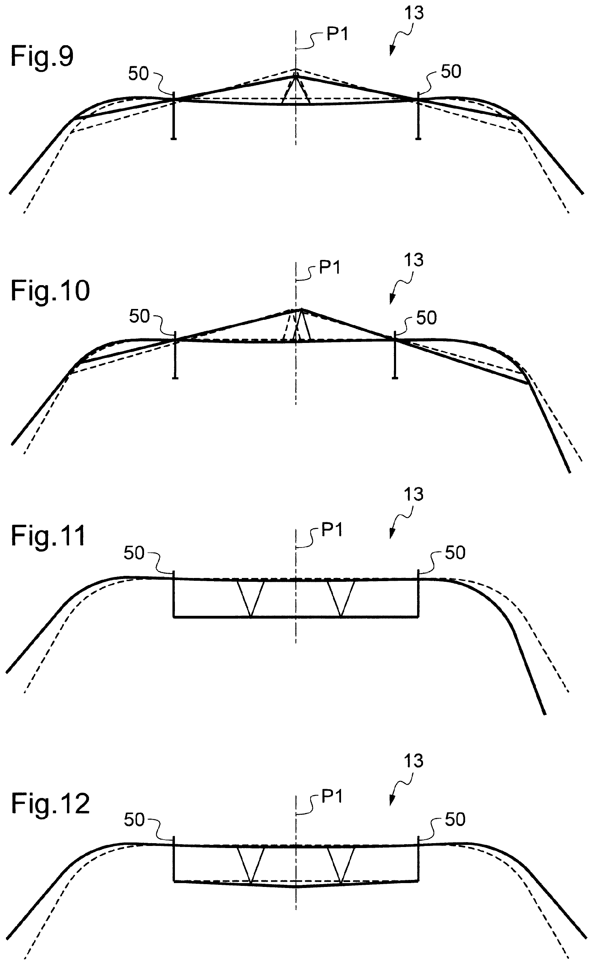

Les figures 9 et 10 explicitent le fonctionnement de la deuxième variante du premier mode de réalisation en représentant une traverse en vol en traits en pointillés, et en représentant une traverse déformée en traits pleins.

En référence à la figure 9 et lors d'un atterrissage, les bielles effectuent une rotation par rapport au gousset et aux branches descendantes de la traverse.

Dès lors, les distances séparant l'extrémité distale du gousset des articulations secondaires des bielles restent sensiblement constantes.

Les bielles ont alors un impact limité sur le gousset et le comportement de la portion centrale.

En référence à la figure 10 et selon le deuxième mode de flexion en roulis au sol, lesdites articulations secondaires subissent un fort déplacement relatif par rapport au gousset. Le raidisseur interfère alors fortement dans la déformation de la traverse.

Selon un deuxième mode de réalisation schématisé sur la figure 4, le raidisseur possède deux goussets 41, 42 disposés de part et d'autre d'un plan de symétrie P1 de cette portion centrale 13.

De plus, le raidisseur est muni de deux bielles 31, 32 rigides s'étendant chacune d'une première extrémité coopérant avec une articulation tertiaire 35, vers une deuxième extrémité coopérant avec articulation secondaire 34. Chaque bielle est de plus articulée à un gousset par une articulation principale 33 agencée entre sa première extrémité et sa deuxième extrémité.

Une articulation principale peut par exemple comporter un pivot solidaire d'une bielle entre sa première extrémité et sa deuxième extrémité, le pivot coopérant avec des joues d'un gousset.

Par suite, les deux bielles sont articulées l'une à l'autre par l'articulation tertiaire 35, chaque articulation secondaire étant articulée à un point extérieur à ladite portion centrale. Chaque point extérieur est un point d'ancrage n'appartenant pas à la portion centrale d'une traverse, à savoir à un organe distinct de la portion centrale.

Chaque articulation secondaire 34 est alors articulée à un point extérieur tel qu'un organe du fuselage 2, ou encore une bride 50 de fixation de la traverse au fuselage 2 selon l'exemple représenté.

Selon l'exemple représenté, les deux goussets sont symétriques par rapport au plan de symétrie, les deux bielles étant symétriques par rapport audit plan de symétrie P1.

Les figures 11 et 12 explicitent le fonctionnement du deuxième mode de réalisation en représentant une traverse en vol en traits en pointillés, et en représentant une traverse déformée en traits pleins.

En référence à la figure 11 et lors d'un atterrissage, les goussets se déplacent parallèlement de bas en haut en parallèle. Les goussets n'interfèrent pas ou peu avec le mouvement de la portion centrale.

Par contre, en référence à la figure 12 et selon le deuxième mode de flexion en roulis au sol, les goussets tendent à se déplacer de bas en haut mais dans des directions opposées. Ce mouvement est alors bloqué par les bielles dans la mesure où les bielles sont liées entre elles par l'articulation tertiaire 35.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Train d'atterrissage (5) d'aéronef (1) muni d'un premier patin (6) longitudinal d'appui et d'un deuxième patin (7) longitudinal d'appui ainsi que d'une traverse avant (10, 11) transversale et d'une traverse arrière (10, 12) transversale reliant chacune le premier patin (6) au deuxième patin, chaque traverse (10) ayant une première branche (16) descendante solidarisée au premier patin (6) ainsi qu'une deuxième branche (17) descendante solidarisée au deuxième patin (7) et une portion centrale (13) solidarisée à la première branche (16) descendante et à la deuxième branche (17) descendante, ce train d'atterrissage (5) comportant au moins un raidisseur (20) agencé sur une traverse (10), ledit raidisseur (20) ayant au moins une bielle (30), **caractérisé en ce que** ledit raidisseur (20) comporte au moins un moyen de limitation (40) de la déformation de la portion centrale (13) suite à un mouvement en roulis de l'aéronef (1) au sol, chaque moyen de limitation (40) étant solidarisé à ladite portion centrale (13) de la traverse, ledit raidisseur (20) comportant au moins une articulation principale (33) pour articuler chaque bielle audit moyen de limitation et une articulation secondaire (34) par bielle pour articuler chaque bielle à un point extérieur à la portion centrale (13) afin de limiter la déformation de la portion centrale (13) suite à un mouvement en roulis de l'aéronef (1) au sol.

2. Train d'atterrissage selon la revendication 1,
**caractérisé en ce que** ladite traverse avant (11) est munie dudit raidisseur (20).

3. Train d'atterrissage selon l'une quelconque des revendications 1 à 2,
**caractérisé en ce que** chaque moyen de limitation (40) est un gousset (41, 42) comportant d'une part une embase (43) solidarisée à une portion centrale (13), et d'autre part une extrémité distale (44) articulée à au moins une bielle par une articulation principale (33).

4. Train d'atterrissage selon l'une quelconque des revendications 1 à 3,
**caractérisé en ce que** ledit raidisseur (20) comporte un unique gousset (41), ce gousset ayant une embase (43) s'étendant le long d'une portion centrale de part et d'autre d'un plan de symétrie (P1) de cette portion centrale.

5. Train d'atterrissage selon la revendication 4,
**caractérisé en ce que** ledit raidisseur (20) comporte une unique bielle (31) s'étendant d'une première extrémité articulée à un gousset par une articulation principale (33) vers une deuxième extrémité coopérant avec une articulation secondaire (34).

6. Train d'atterrissage selon la revendication 4,
**caractérisé en ce que** ledit raidisseur (20) comporte une bride (50) de fixation de la portion centrale à une structure d'un aéronef (1), ladite articulation secondaire (34) articulant ladite bielle à ladite bride (50) de fixation.

7. Train d'atterrissage selon la revendication 4,
**caractérisé en ce que** ledit raidisseur (20) comporte une première bielle (31) qui est articulée d'une part audit gousset (41) et d'autre part à la première branche (16) descendante, ledit raidisseur (20) ayant une deuxième bielle (32) qui est articulée d'une part audit gousset (41) et d'autre part à la deuxième branche (17) descendante.

8. Train d'atterrissage selon l'une quelconque des revendications 1 à 3,
**caractérisé en ce que** ledit raidisseur (20) d'une portion centrale comporte :
- deux goussets (41, 42) disposés de part et d'autre d'un plan de symétrie (P1) de cette portion centrale (13),
- deux bielles (31, 32) s'étendant chacune d'une première extrémité vers une deuxième extrémité coopérant avec une articulation secondaire (34), chaque bielle étant articulée à un gousset par une articulation principale (33) entre sa première extrémité et sa deuxième extrémité, lesdites premières extrémités desdites deux bielles étant articulées l'une à l'autre par une articulation tertiaire (35), chaque articulation secondaire (34) étant articulée à un point extérieur à ladite portion centrale.

9. Train d'atterrissage selon la revendication 8,
**caractérisé en ce que** ledit raidisseur (20) comporte deux brides (50) de fixation de la portion centrale à une structure d'un aéronef (1), chaque articulation secondaire (34) étant articulée à une bride de fixation.

10. Train d'atterrissage selon la revendication 8,
**caractérisé en ce que** lesdits deux goussets sont symétriques par rapport audit plan de symétrie (P1), lesdites deux bielles étant symétriques par rapport audit plan de symétrie (P1).

11. Aéronef (1),
**caractérisé en ce que** cet aéronef (1) comporte un train d'atterrissage (5) selon l'une quelconque des revendications 1 à 10.

## Patentansprüche

1. Landegestell (5) eines Luftfahrzeugs (1) mit einer ersten Längstragkufe (6) und einer zweiten Längstragkufe (7) sowie einer vorderen Querstrebe (10, 11) und einer hinteren Querstrebe (10, 12), die jeweils die erste Kufe (6) mit der zweiten Kufe verbinden, wobei jede Querstrebe (10) einen ersten abwärts weisenden Schenkel (16) aufweist, der mit der ersten Kufe (6) fest verbunden ist, sowie einen zweiten abwärts weisenden Schenkel (17), der mit der zweiten Kufe (7) fest verbunden ist, und einen mittleren Abschnitt (13), der mit dem ersten abwärts weisenden Schenkel (16) und dem zweiten abwärts weisenden Schenkel (17) fest verbunden ist, wobei dieses Landegestell (5) aufweist:
mindestens eine Versteifung (20), die auf einer Querstrebe (10) angeordnet ist, wobei die Versteifung (20) mindestens eine Kurbelstange (30) aufweist,
**dadurch gekennzeichnet, dass** die Versteifung (20) mindestens ein Mittel (40) zur Begrenzung der Verformung des mittleren Abschnitts (13) infolge einer Nickbewegung des Luftfahrzeugs (1) am Boden aufweist, wobei jedes Begrenzungsmittel (40) mit dem mittleren Abschnitt (13) der Querstrebe fest verbunden ist, wobei die Versteifung (20) mindestens ein Hauptgelenk (33) aufweist, um jede Kurbelstange an dem Begrenzungsmittel anzulenken, und ein Nebengelenk (34) pro Kurbelstange, um jede Kurbelstange an einem äußeren Punkt an dem mittleren Abschnitt (13) anzulenken, um die Verformung des mittleren Abschnitts (13) infolge einer Nickbewegung des Luftfahrzeugs (1) am Boden zu begrenzen.

2. Landegestell nach Anspruch 1,
**dadurch gekennzeichnet, dass** die vordere Querstrebe (11) mit der Versteifung (20) versehen ist.

3. Landegestell nach einem der Ansprüche 1 bis 2,
**dadurch gekennzeichnet, dass** jedes Begrenzungsmittel (40) ein Verbindungsblech (41, 42) ist, das einerseits ein Grundblech (43) aufweist, das mit einem mittleren Abschnitt (13) fest verbunden ist, und andererseits ein distales Ende (44) aufweist, das an mindestens einer Kurbelstange durch ein Hauptgelenk (33) angelenkt ist.

4. Landegestell nach einem der Ansprüche 1 bis 3,
**dadurch gekennzeichnet, dass** jede Versteifung (20) ein einziges Verbindungsblech (40) aufweist, wobei das Verbindungsblech ein Grundblech (43) aufweist, das sich entlang eines mittleren Abschnitts zu beiden Seiten einer Symmetrieebene (P1) dieses mittleren Abschnitts erstreckt.

5. Landegestell nach Anspruch 4,
**dadurch gekennzeichnet, dass** die Versteifung (20) eine einzige Kurbelstange (31) aufweist, die sich von einem ersten Ende, das an ein Verbindungblech durch ein Hauptgelenk (33) angelenkt ist, zu einem zweiten Ende erstreckt, das mit einem Nebengelenk (34) zusammenwirkt.

6. Landegestell nach Anspruch 4,
**dadurch gekennzeichnet, dass** die Versteifung (20) eine Befestigungslasche (50) des mittleren Abschnitts an einem Aufbau des Luftfahrzeugs (1) aufweist, wobei das Nebengelenk (34) die Kurbelstange an der Befestigungslasche (50) anlenkt.

7. Landegestell nach Anspruch 4,
**dadurch gekennzeichnet, dass** die Versteifung (20) eine erste Kurbelstange (31) aufweist, die einerseits an dem Verbindungsblech (41) und andererseits an dem ersten abwärts weisenden Schenkel (16) angelenkt ist, wobei die Versteifung (20) eine zweite Kurbelstange (32) aufweist, die einerseits an dem Verbindungsblech (41) und andererseits an dem zweiten abwärts weisenden Schenkel (17) angelenkt ist.

8. Landegestell nach einem der Ansprüche 1 bis 3,
**dadurch gekennzeichnet, dass** die Versteifung (20) eines mittleren Abschnitts aufweist:
- zwei Verbindungsbleche (41, 42), die zu beiden Seiten einer Symmetrieebene (P1) dieses mittleren Abschnitts (13) angeordnet sind,
- zwei Kurbelstangen (31, 32), die sich jeweils von einem ersten Ende zu einem zweiten Ende erstrecken, und die mit einem Nebengelenk (34) zusammenwirken, wobei jede Kurbelstange an einem Verbindungsblech über ein Hauptgelenk (33) zwischen ihrem ersten Ende und ihrem zweiten Ende angelenkt ist, wobei die ersten Enden der beiden Kurbelstangen aneinander durch ein tertiäres Gelenk (35) angelenkt sind, wobei jedes sekundäre Gelenk (34) an einem Punkt außerhalb des mittleren Abschnitts angelenkt ist.

9. Landegestell nach Anspruch 8,
**dadurch gekennzeichnet, dass** die Versteifung (20) zwei Laschen (50) zur Befestigung des mittleren Abschnitts an einem Aufbau des Luftfahrzeugs (1) aufweist, wobei jedes sekundäre Gelenk (34) an einer Befestigungslasche angelenkt ist.

10. Landegestell nach Anspruch 8,
**dadurch gekennzeichnet, dass** die beiden Verbindungsbleche symmetrisch relativ zu der Symmetrieebene (P1) sind, wobei die beiden Kurbelstangen symmetrisch relativ zu der Symmetrieebene (P1) sind.

11. Luftfahrzeug (1),
**dadurch gekennzeichnet, dass** dieses Luftfahrzeug (1) ein Landegestell (5) nach einem der Ansprüche 1 bis 10 aufweist.

## Claims

1. Landing gear (5) of an aircraft (1) provided with a first longitudinal support skid (6) and with a second longitudinal support skid (7), as well as a transversal front cross-member (10, 11) and a transversal rear cross-member (10, 12), each connecting the first skid (6) to the second skid, each cross-member (10) having a first downward branch (16) secured to the first skid (6), as well as a second downward branch (17) secured to the second skid (7) and a central portion (13) secured to the first downward branch (16) and to the second downward branch (17),
the landing gear (5) comprising at least one stiffener (20) arranged on a cross-member (10), said stiffener (20) having at least one connecting rod (30), **characterised in that** said stiffener (20) comprises at least one limiting means (40) for limiting the deformation of the central portion (13) as a result of a roll movement of the aircraft (1) on the ground, each limiting means (40) being secured to said central portion (13) of the cross-member, said stiffener (20) comprising at least one main articulation (33) for articulating each connecting rod to said limiting means and one secondary articulation (34) per connecting rod for articulating each connecting rod to a point outside the central portion (13) in order to limit the deformation of the central portion (13) as a result of a roll movement of the aircraft (1) on the ground.

2. Landing gear according to claim 1,
**characterised in that** said front cross-member (11) is provided with said stiffener (20).

3. Landing gear according to any one of claims 1 to 2,
**characterised in that** each limiting means (40) is a gusset (41, 42) comprising on one side a base (43) secured to a central portion (13), and on the other side a distal end (44) articulated to at least one connecting rod by a main articulation (33).

4. Landing gear according to any one of claims 1 to 3,
**characterised in that** said stiffener (20) comprises a single gusset (41), the gusset having a base (43) extending along a central portion on one side and the other side of a plane of symmetry (P1) of the central portion.

5. Landing gear according to claim 4,
**characterised in that** said stiffener (20) comprises a single connecting rod (31) extending from a first end articulated to a gusset by a main articulation (33), to a second end cooperating with a secondary articulation (34).

6. Landing gear according to claim 4,
**characterised in that** said stiffener (20) comprises a fastening flange (50) for fastening the central portion to a structure of an aircraft (1), said secondary articulation (34) articulating said connecting rod to said fastening flange (50).

7. Landing gear according to claim 4,
**characterised in that** said stiffener (20) comprises a first connecting rod (31) which is articulated on one side to said gusset (41) and on the other side to the first downward branch (16), said stiffener (20) having a second connecting rod (32) which is articulated on one side to said gusset (41) and on the other side to the second downward branch (17).

8. Landing gear according to any one of claims 1 to 3,
**characterised in that** said stiffener (20) for stiffening a central portion comprises:
- two gussets (41, 42) disposed on one side and on the other side of a plane of symmetry (P1.) of the central portion (13),
- two connecting rods (31, 32), each extending from a first end to a second end cooperating with a secondary hinge (34), each connecting rod being articulated to a gusset by a main articulation (33) between its first end and its second end, said first ends of said two connecting rods being articulated to each other by a tertiary articulation (35), each secondary articulation (34) being articulated to a point outside said central portion.

9. Landing gear according to claim 8,
**characterised in that** said stiffener (20) comprises two fastening flanges (50) for fastening the central portion to a structure of an aircraft (1), each secondary articulation (34) being articulated to a fastening flange.

10. Landing gear according to claim 8,
**characterised in that** said two gussets are symmetrical with respect to said plane of symmetry (P1), said two connecting rods being symmetrical with respect to said plane of symmetry (P1).

11. Aircraft (1),
**characterised in that** said aircraft (1) comprises a landing gear (5) according to any one of claims 1 to 10.
